# EUROPÄISCHE PATENTSCHRIFT

(11) **EP 2 475 966 B1**
(45) Veröffentlichungstag und Bekanntmachung des Hinweises auf die Patenterteilung: **21.06.2017**
(21) Anmeldenummer: 10754691.3
(22) Anmeldetag: 08.09.2010
(51) Int. Cl.: G01D 5/347, G01D 5/244

(54) **VORRICHTUNG UND VERFAHREN ZUR OPTISCHEN KOMPENSATION DER MASSSPURDEZENTRIERUNG BEI DREHWINKELSENSOREN**
DEVICE AND METHOD FOR OPTICALLY COMPENSATING FOR THE MEASURING TRACK DECENTRALIZATION IN ROTATION ANGLE SENSORS
PROCÉDÉ ET DISPOSITIF DE COMPENSATION OPTIQUE DU DÉCENTRAGE DE PISTE DE MESURE SUR DES CAPTEURS ROTATIFS D'ANGLE

(30) Priorität: 09.09.2009 DE 102009040790
(43) Veröffentlichungstag der Anmeldung: 18.07.2012
(73) Patentinhaber: Universität Stuttgart, 70174 Stuttgart (DE)
(72) Erfinder: HOPP, David, 78166 Donaueschingen (DE); PRUß,Christof, 73760 Ostfildern (DE); OSTEN, Wolfgang, 70569 Stuttgart (DE)
(74) Vertreter: Müller-Boré & Partner Patentanwälte PartG mbB
(86) Internationale Anmeldenummer: PCT/EP2010/005514
(87) Internationale Veröffentlichungsnummer: WO 2011/029587

(56) Entgegenhaltungen:
- EP-A1- 1 632 754
- US-A1- 2004 206 894
- US-A1- 2006 043 271

## Beschreibung

Die Erfindung betrifft eine Kodierscheibe für einen optischen Drehwinkelsensor bzw. Drehgeber, einen optischen Drehwinkelsensor bzw. Drehgeber sowie ein Verfahren zur optischen Korrektur bzw. Kompensation eines Winkelmessfehlers in einem optischen Drehgeber, insbesondere eines Winkelmessfehlers, welcher insbesondere durch eine Verschiebung bzw. Dezentrierung der Kodierscheibe bedingt ist.

Das Grundprinzip optischer Drehwinkelsensoren, auch Drehgeber genannt, basiert auf einer drehbar gelagerten Welle, auf welcher eine Kode- bzw. Kodierscheibe fixiert ist. Auf dieser Kodierscheibe sind eine oder mehrere Maßspuren aufgebracht, die durch eine feststehende Lichtquelle beleuchtet werden. Durch die Relativbewegung der Kodierscheibe zur Lichtquelle wird abhängig von der Winkelstellung der Welle ein bestimmter Bereich der Maßspuren ausgeleuchtet. Über eine Detektoreinheit, z.B. eine Fotodiode, erfolgt das Auslesen des resultierenden Lichtfelds. Dieses Signal kann direkt oder indirekt der Winkelstellung bzw. der Drehbewegung der Scheibe und damit der Welle zugeordnet werden.

Optische Drehgeber werden sowohl im Durchlicht (z.B. nach dem Lichtschrankenprinzip, Moire, etc.), in Reflexion, als auch auf Basis von diffraktiver Ablenkung (Beugung) betrieben. Unabhängig von der Auflösung hängt bei allen diesen Kodierprinzipien die Genauigkeit des Drehgebers, d.h. die Diskrepanz zwischen dem tatsächlichen Wellenwinkel und dem optisch gemessenen Winkel, direkt von der Zuordenbarkeit von Scheibenbewegung und Wellenbewegung ab. Eine Dezentrierung der Maßspur bzw. der Scheibenachse zur Wellenachse, d.h. ein sogenannter Schlag der Maßspur, führt zu einem nicht zu vernachlässigenden Winkelmessfehler. Dieser äußert sich in einer kosinusförmigen Abweichung über den gesamten Umfang der Drehbewegung.

Um eine hohe Genauigkeit zu erreichen, ist es zwingend notwendig, die Maßspur bzw. die Kodierscheibe möglichst genau zur Welle zu zentrieren, d.h. zu justieren. Dies erfordert einen hohen Aufwand bei der Montage und ist daher kostenintensiv. Trotz des hohen Aufwands kann ein geringer Dezentrierungsfehler mechanisch nie vollständig vermieden werden. Aufgrund dessen wird nach Strategien für eine Kompensation dieses unvermeidbar auftretenden Schlags der Maßspur gesucht.

Bisherige Lösungsansätze verfolgen hauptsächlich die Strategie, den Winkelfehler in der Auswertung zu eliminieren:

So kann zum Beispiel durch den Einsatz zweier oder mehrerer optischer Ausleseeinheiten, welche unter einem bekannten Winkel zueinander angeordnet sind, der Schlag der Kodierscheibe ermittelt werden. Das Winkelsignal kann dann durch Einsatz von Elektronik korrigiert werden. Alternativ hierzu finden auch separate Maßspuren Verwendung, deren Signal ein direktes Maß für den Schlag der Scheibe darstellt.

Ein Nachteil bisheriger Kompensationslösungen liegt in der Notwendigkeit mehrerer Ausleseeinheiten bzw. zusätzlicher Maßspuren. Außerdem geschieht die Kompensation bei diesen Verfahren immer erst nach Auslesen des Winkels und ist daher mit dem zusätzlichen Einsatz von Elektronik verbunden.

US 2004/0206894 A1 offenbart einen optischen Drehgeber mit einer Lichtquelle, die sich auf oder in der Nähe der Drehachse einer Welle befindet, und einer Kodierscheibe, die an der Welle angebracht ist. In Umfangsrichtung besitzt die Kodierscheibe mehrere abwechselnd lichtdurchlässige und lichtundurchlässige Bereiche. Ein von der Kodierscheibe beanstandeter Reflektor reflektiert die von der Lichtquelle emittierten Lichtstrahlen und bündelt sie zu einem parallelen Lichtstrahl. Der parallele Lichtstrahl beleuchtet die lichtdurchlässigen Bereiche der Kodierscheibe, so dass das durchgehende Licht zu dem peripheren Bereich der Lichtquelle gelenkt wird. Ferner umfasst der Drehgeber ein oder mehrere Detektorelemente, welche das durch die lichtdurchlässigen Bereiche durchgehende Licht empfangen.

US 2006/0043271 A1 offenbart eine Kodierscheibe mit einer ersten und einer zweiten Fläche, welche derart konfiguriert sind, dass ein Lichtstrahl an den beiden Flächen per Totalreflexion reflektiert wird. Die Kodierscheibe umfasst ferner ein Kodierungsmuster, welches im optischen Weg des an den beiden Oberflächen reflektieren Lichtstrahls angeordnet ist. Die Kodierscheibe kann in einen, auf Transmission basierenden optischen Drehgeber eingebaut werden. In diesem Fall können sich die Lichtquelle und das Photodetektor-Array auf der gleichen Seite der Kodierscheibe befinden.

EP 1 632 754 A1 offenbart ein Verfahren und eine Vorrichtung zum genauen Bestimmen eines Drehwinkels. Bei diesem Verfahren wird eine Vielzahl von um ein Musterzentrum angeordneten Musterelementen auf einer Vielzahl von Detektorelementen eines optischen Detektors abgebildet. Die Musterelemente sind auf einem Drehkörper angeordnet, der mit dem Detektor um eine Achse drehbar verbunden ist. Über die Detektorelemente ein und desselben Detektors werden Positionen der abgebildeten Musterelemente aufgelöst. Die Auswirkungen einer Exzentrizität des Musterzentrums zur Achse auf das Bestimmen des Drehwinkels werden über die aufgelösten Positionen der Musterelemente rechnerisch ermittelt. Der Drehwinkel wird in einem zweiten Schritt unter Berücksichtigung der ermittelten Auswirkungen über die aufgelösten Positionen hintereinander angeordneter Musterelemente genau bestimmt.

Aufgabe der Erfindung ist es, ein effizientes Verfahren sowie eine entsprechende Vorrichtung zur Korrektur bzw. Kompensation des Winkelmessfehlers in einem optischen Drehgeber, bereitzustellen, insbesondere ein Verfahren zur Korrektur bzw. Kompensation des Winkelmessfehlers, welcher durch eine Verschiebung bzw. Dezentrierung der Kodierscheibe des Drehgebers relativ zur Wellenachse bedingt ist. Weitere Aufgaben der Erfindung sind, die Justierung der Kodierscheibe zur Wellenachse, sowie die Ermittlung der korrekten Winkel bzw. die korrekte Winkelstellung zu erleichtern bzw. effizienter zu gestalten.

Diese Aufgabe(n) wird bzw. werden durch einen optischen Drehwinkelsensor bzw. Drehgeber mit den im Anspruch 1 angegebenen Merkmalen, ein Verfahren zur Korrektur bzw. Kompensation eines Winkelmessfehlers (insbesondere eines Winkelmessfehlers, welcher durch eine Verschiebung bzw. Dezentrierung der Kodierscheibe bedingt ist) in einem optischen Drehgeber mit den im Anspruch 13 angegebenen Merkmalen und eine Verwendung einer Kodierscheibe in einem optischen Drehgeber mit den im Anspruch 15 angegebenen Merkmalen gelöst.

Die vorgeschlagene Lösung basiert auf einer optischen Kompensation des Scheibenschlags.

Insbesondere wird gemäß einem ersten Aspekt der Erfindung ein optischer Drehwinkelsensor bzw. Drehgeber mit einer verbesserten Kodierscheibe vorgeschlagen. Die Kodierscheibe umfasst zumindest eine Maßspur und zumindest eine Kompensationsspur, wobei
die Maßspur in einem ersten radialen Bereich der Kodierscheibe angeordnet ist;
die Kompensationsspur zentriert bzw. konzentrisch zu der Maßspur auf einen zweiten (vorzugsweise sich von dem ersten radialen Bereich unterscheidenden) radialen Bereich der Kodierscheibe angeordnet ist, so dass das Zentrum bzw. Drehzentrum der Maßspur mit dem Zentrum bzw. Drehzentrum der Kompensationsspur zusammenfällt.

Die Maßspur ist derart ausgelegt, dass bei einer Beleuchtung eines Abtastbereichs der Maßspur, zumindest ein optischer Messstrahl erzeugt bzw. generiert wird, wobei zumindest ein optischer Parameter des Messstrahls in Abhängigkeit von dem zu messenden Winkel moduliert wird.

Ein radialer Bereich der Kodierscheibe ist insbesondere ein ringförmiger Bereich der Kodierscheibe, dessen Zentrum mit dem gemeinsamen Zentrum der Kompensations- und der Maßspur (im Wesentlichen) zusammenfällt und welcher sich im
Wesentlichen über den gesamten Umfang der Kodierscheibe (nicht jedoch über die gesamte Oberfläche der Kodierscheibe) erstreckt. Unterschiedliche radiale Bereiche sind insbesondere Bereiche, welche nicht mit einander überlappen. Dementsprechend sind die Kompensations- und die Maßspur vorzugsweise derart angeordnet, dass sie nicht mit einander überlappen bzw. nicht mit einander in einem gleichen radialen Bereich verschachtelt sind. Es ist jedoch möglich, die Kompensations- und die Maßspur verschachtelt in einem gleichen radialen Bereich anzuordnen.

In einem optischen Drehgeber, welcher eine Kodierscheibe mit einer oder mehreren Maßspuren aufweist, wird die sich drehende, z.B. diffraktive Maßspur durch einen Lichtspot (Beleuchtungsspot), insbesondere durch einen fokussierten Lichtspot, beleuchtet. Durch den Schlag der Kodierscheibe bewegt sich jedoch die zu beleuchtende Stelle der Maßspur bzw. der Abtastbereich der Maßspur in tangentialer als auch in radialer Richtung relativ zur Beleuchtung bzw. zum Beleuchtungsstrahl, was zum oben beschriebenen Winkelmessfehler führt. Die Maßspur kann derart ausgelegt werden, dass eine radiale Verschiebung der Kodierscheibe keine Signaländerung bewirkt. Die Relativbewegung zur Beleuchtung in tangentialer Richtung hingegen muss durch das Funktionsprinzip des Drehwinkelsensors bzw. Drehgebers korrigiert werden.

Die radiale Richtung bezieht sich dabei auf die Achse zwischen dem Zentrum der beleuchteten Stelle (bzw. dem Zentrum des Abtastbereichs) und dem Wellenmittelpunkt. Die tangentiale Richtung bezieht sich auf die Richtung senkrecht zu der radialen Richtung und senkrecht zu der axialen Richtung, wobei die axiale Richtung mit der Wellenachse zusammenfällt. Die Kodierscheibe ist in der Regel derart angeordnet, dass die axiale Richtung senkrecht zur Ebene der Kodierscheibe ist.

Erfindungsgemäß wird eine optische Kompensation bzw. Korrektur des oben beschriebenen Winkelmessfehlers, vorzugsweise ohne zusätzliche Ausleseeinheit und/oder Elektronik, vorgeschlagen. Dies wird insbesondere durch den Einsatz einer modifizierten Kodierscheibe ermöglicht, welche zusätzlich zu der zumindest einen Maßspur zumindest eine weitere Spur (z.B. eine weitere diffraktive Spur), die so genannte Kompensationsspur, aufweist. Die Kodierscheibe kann dabei eine diskförmige, runde Scheibe mit vorzugsweise konstanter Dicke sein, wobei die Maßspur und Kompensationsspur auf eine der Flächen der Kodierscheibe aufgebracht werden können.

Die optische Korrektur des Schlags der Kodierscheibe und insbesondere der damit verbundenen tangentialen Verschiebung oder Dezentrierung der Kodierscheibe in Bezug auf die Welle und der entsprechenden tangentialen Verschiebung der Kodierscheibe relativ zur Beleuchtung erfolgt, indem der fokussierte Lichtspot (Beleuchtungsspot) mit der tangentialen Bewegung der diffraktiven Maßspur bzw. der Kodierscheibe "mitgeführt" wird. Dies wird durch die Kompensationsspur erreicht, welche sich zentriert bzw. konzentrisch zur Maßspur, vorzugsweise auf einem anderen radialen bzw. Radiusbereich der drehenden Kodierscheibe, befindet und eine geeignete Struktur, z.B. eine Spielgelstruktur oder eine diffraktive Struktur, aufweist. Die zentriert bzw. konzentrisch zu einander angeordneten Kompensationsspur und Maßspur werden so ausgebildet und angeordnet, dass sie eine gemeinsame Drehachse besitzen. Somit fällt das Zentrum bzw. Drehzentrum der Kompensationsspur mit dem Zentrum bzw. Drehzentrum der Maßspur zusammen.

Die Kompensationsspur ist insbesondere derart ausgelegt, dass bei einer Beleuchtung eines Bereichs der Kompensationsspur zumindest ein Strahl erzeugt bzw. generiert wird, welcher z.B. mittels einer geeigneten optischen oder opto-elektronischen Umlenkvorrichtung auf die Maßspur gerichtet werden kann. Anders ausgedrückt ist die Kompensationsspur insbesondere derart ausgelegt, dass Beleuchtungslicht (Ausleselicht), welches auf einen Bereich der Kompensationsspur unter einen vorgegebenen bzw. vorgebbaren (einstellbaren) Beleuchtungswinkel (z.B. normal zu der Ebene der Kodierscheibe) einfällt, durch die Kompensationsspur derart abgelenkt wird, dass zumindest ein Teil des abgelenkten Beleuchtungslichts direkt oder indirekt, d.h. mittels einer geeigneten optischen oder opto-elektronischen Umlenkvorrichtung auf einen vorgegebenen oder vorgebbaren Abtastbereich der Maßspur gerichtet bzw. fokussiert werden kann. Vorzugsweise umfasst die Umlenkvorrichtung zumindest ein relativ zu der Lichtquelle feststehendes optisches Element (z.B. ein Spiegel, ein Retroreflektor, ein Prisma, insbesondere ein Pentaprisma, etc.). Besonders bevorzugt ist die Umlenkvorrichtung feststehend relativ zu der Lichtquelle. Die Lichtquelle kann ebenfalls feststehend sein.

Durch die vorgeschaltete optische Ablenkung der Beleuchtungsstrahlen an die Kompensationsspur kann erzielt werden, dass der durch das Beleuchtungslicht erzeugte Beleuchtungsspot (welcher den Abtastbereich der Maßspur beleuchten soll) nicht statisch bleibt, sondern mit der Verschiebung der Kodierscheibe und somit der Kompensations- und die Maßspur "mitgeführt" wird.

Die Kompensationsspur dient somit einer Ablenkung des auf ein Bereich der Kompensationsspur einfallenden Beleuchtungslichts in Abhängigkeit von der Dezentrierung der in einem optischen Drehgeber angeordneten Kodierscheibe in Bezug auf die Welle bzw. auf die Wellenachse. Ein Versatz bzw. eine Dezentrierung der Kodierscheibe erzeugt eine Winkeländerung der Strahlablenkung des Beleuchtungslichts.

So wird bei einer Beleuchtung eines Bereichs (bzw. eines Spots) der Kompensationsspur durch eine feststehende Lichtquelle und/oder unter einem vorgegebenen oder vorgebbaren Beleuchtungswinkel (z.B. in axialer Richtung) das einfallende Beleuchtungslicht durch die Kompensationsspur abgelenkt. Zumindest ein Teil des abgelenkten Beleuchtungslichts kann z.B. mittels einer geeigneten optischen bzw. opto-elektronischen Umlenkvorrichtung auf die eigentliche Maßspur gerichtet bzw. fokussiert werden. Die Umlenkung kann derart gestaltet werden, dass die optische Weglänge von der Kompensationsspur zur Maßspur der optischen Weglänge von der Kompensationsspur zu deren Drehachse entspricht. Dies hat zur Folge, dass die Beleuchtung der Maßspur immer auf tangentialer Höhe ihrer Drehachse erfolgt.

Bewegt sich nun die Kodierscheibe aufgrund des mechanischen Schlags in tangentialer Richtung zur Lichtquelle, bewegt sich in Abhängigkeit von der tangentialen Verschiebung auch die Beleuchtung auf der Maßspur bzw. der Beleuchtungsspot. Dabei kann durch eine geeignete Auswahl der Struktur und der Parameter der Kompensationsspur und gegebenenfalls durch eine geeignete Umlenkvorrichtung erreicht werden, dass unabhängig vom Schlag der Kodierscheibe die Maßspur immer an im Wesentlichen derselben tangentialen Position beleuchtet wird. Der potentielle Winkelfehler bzw. Winkelmessfehler kann somit optisch kompensiert werden, so dass der korrekte Winkel ausgelesen werden kann.

Die Kompensationsspur kann unterschiedlich ausgebildet werden. Die Kompensationsspur kann beispielsweise eine Spiegelstruktur (z.B. eine unter einem geeigneten Winkel umlaufende Spiegelfläche) oder eine Prismenstruktur) aufweisen.

Vorzugsweise weist die Kompensationsspur eine diffraktive Struktur auf. Die diffraktive Kompensationsspur kann derart ausgelegt werden, dass die an die Kompensationsspur gebeugte Strahlen der N-ten (z.B. der ersten Beugungsordnung) z.B. mittels einer geeigneten optischen Umlenkvorrichtung auf einen vorgegebenen Abtastbereich der Maßspur gerichtet bzw. fokusiert werden können. Somit dient die diffraktive Kompensationsspur einer Ablenkung der N-ten (vorzugsweise ersten) Beugungsordnung in Abhängigkeit von einer Dezentrierung der in einem optischen Drehgeber angeordneten Kodierscheibe in Bezug auf die Welle bzw. auf die Wellenachse des optischen Drehgebers.

Die diffraktive Kompensationsspur kann zumindest ein Beugungsgitter umfassen, welches sich in radialer Richtung im Wesentlichen über den gesamten Umfang der Kodierscheibe erstreckt. Das Beugungsgitter kann ein reflektives oder ein transmissives Beugungsgitter sein. Das Beugungsgitter kann ferner ein holographisches Beugungsgitter sein. Bezüglich der Parameter des Beugungsgitters, wie Gitterkonstante und/oder Winkelanordnungen der Gitterlinien, gibt es prinzipiell keine Beschränkungen. Die Gitterkonstante und/oder die Winkelanordnung der Gitterlinien der Beugungsgitter können in Abhängigkeit von dem Einsatzbereich, z.B. in Abhängigkeit von der Wellenlänge des Beleuchtungslichts, und/oder der Geometrie, Anordnung und/oder der Abmaßen der einzelnen Komponenten der optischen Anordnung des Drehgebers, und/oder des Brechungsindex des Materials der Kodierscheibe geeignet ausgewählt werden, so dass zumindest ein Teil der gebeugten Strahlen direkt oder indirekt mittels einer geeigneten optischen Umlenkvorrichtung auf einen vorgegebenen oder vorgebbaren Abtastbereich der Maßspur gerichtet wird.

In einem Beispiel kann die Kompensationsspur als eine Axikonstruktur ausgeführt werden, d.h. zumindest ein Teil des Beleuchtungslichts (Ausleselichts), welches in einer vorgegebenen Richtung (z.B. in axialer Richtung) auf die Kodierscheibe fällt, wird von der Kompensationsspur radial in Richtung der Achse durch das gemeinsame Zentrum von Kompensations- und Maßspur abgelenkt. Bei einer diffraktiven Kompensationsspur wird z.B. das auf die Kodierscheibe einfallende Beleuchtungslicht derart in Beugungsordnungen aufgespalten, dass die Strahlen der N-ten (z.B. der ersten) Beugungsordnung immer in Richtung des Zentrums der Kompensationsspur und damit auch des Zentrums der Maßspur abgelenkt werden. In einer Ebene, welche parallel zu der Ebene bzw. Oberfläche der Kodierscheibe (bzw. zu der Kodierscheibe) ist, verläuft die Projektion des abgelenkten Lichtstrahls der N-ten Beugungsordnung oder die virtuelle Verlängerung der Projektion des abgelenkten Lichtstrahls der N-ten Beugungsordnung insbesondere durch das gemeinsame Drehzentrum bzw. Zentrum der Kompensations- und der Maßspur. Vorzugsweise besitzt die Richtung des durch die Kompensationsspur abgelenkten Beleuchtungslichts (Ausleselichts) einen Schnittpunkt mit der Achse durch das gemeinsame Zentrum von Kompensations- und Maßspur, wobei der Abstand zwischen der Kompensationsspur und diesem Schnittpunkt der Länge des Lichtwegs zwischen der Kompensations- und der Maßspur entspricht.

Bei einer diffraktiven Kompensationsspur können z.B. die Strahlen der N-ten (z.B. der ersten) Beugungsordnung in einer anderen Richtung als in Richtung des gemeinsamen Zentrums von Kompensations- und Maßspur abgelenkt werden. Dies kann z.B. durch ein oder mehreren Beugungsgitter mit unterschiedlichen Winkelorientierungen der Gitterlinien und/oder Gitterkonstanten erzielt werden. Die Ablenkungsrichtung der Strahlen, z.B. der Strahlen der N-ten Beugungsordnung, kann beliebig sein. Mit einer geeigneten optischen oder opto-elektronischen Umlenkvorrichtung, umfassend z.B. zumindest einen Spiegel und/oder zumindest einen Retroreflektor, und/oder zumindest ein Prisma (z.B ein Pentaprisma), und/oder anderen optischen Elementen können die Strahlen der N-ten (z.B. der ersten) Beugungsordnung anschließend in Richtung des Drehzentrums der Kompensationsspur umgelenkt werden. Anders ausgedrückt kann die Kompensationsspur derart ausgelegt werden, dass zumindest ein Teil des auf die Kompensationsspur einfallenden Beleuchtungslichts (Ausleselichts) direkt oder indirekt (d.h. mittels einer geeigneten optischen oder opto-elektronischen Umlenkvorrichtung) in Richtung des gemeinsamen Zentrums von Kompensations- und Maßspur ab- bzw. umgelenkt werden.

So kann in einem weiteren Beispiel die Kompensationsspur derart ausgelegt werden, dass Licht, vorzugsweise kohärentes Licht, welches unter einen vorgegebenen oder vorgebbaren Beleuchtungswinkel auf einen Bereich der Kompensationsspur einfällt, derart in Beugungsordnungen aufgespaltet wird, dass die Strahlen der N-ten Beugungsordnung, wobei N eine ganze Zahl ist, tangential zu der Kompensationsspur in dem beleuchteten Bereich abgelenkt werden. Die Kompensationsspur kann in diesem Fall z.B. eine Gitterstruktur bzw. ein Beugungsgitter mit radial (d.h. in Richtung des Drehzentrums der Kompensationsspur) ausgerichteten Gitterlinien aufweisen.

Die Ablenkung der N-ten (z.B. der ersten) Beugungsordnung geschieht in Abhängigkeit von der Wellenlänge und/oder der Gitterkonstante der diffraktiven Struktur der Kompensationsspur unter einem konstanten Winkel, unabhängig von der tangentialen Verschiebung bzw. Dezentrierung der Kodierscheibe.

Erfolgt eine Beleuchtung eines Bereichs (bzw. eines Spots) der Kompensationsspur durch eine feststehende Lichtquelle und/oder unter einem vorgegebenen bzw. festen oder einstellbaren Winkel (z.B. in axialer Richtung), wird das einfallende Licht wie oben beschrieben abgelenkt oder gebeugt. Wird nun zumindest ein Teil der durch die Kompensationsspur abgelenkten Beleuchtungsstrahlen der Kompensationsspur (z.B. die Strahlen der N-ten Beugungsordnung) mittels einer geeigneten optischen bzw. opto-elektronischen Umlenkvorrichtung, umfassend z.B. relativ zu der Lichtquelle feststehende optische Elemente (Spiegel, Prismen, und/oder andere optische und/oder opto-elektronische Elemente) geeignet umgelenkt, so lassen sich diese nach der Ablenkung oder Beugung an der Kompensationsspur auf die eigentliche Maßspur richten bzw. fokussieren. Durch einer geeigneten Auslegung und Anordnung der Komponenten (Kompensationsspur und/oder Umlenkvorrichtung) kann die Umlenkung derart gestaltet werden, dass die Maßspur vom Ausleselicht unabhängig vom Versatz immer an derselben Winkelposition in der Maßspur beleuchtet wird, solange der Drehwinkel der Kodierscheibe konstant ist. Insbesondere kann die Umlenkung derart gestaltet werden, dass die optische Weglänge von der Kompensationsspur zur Maßspur genau der optischen Weglänge von der Kompensationsspur zu deren Drehachse entspricht. Dies hat zur Folge, dass die Beleuchtung der Maßspur immer auf tangentialer Höhe ihrer Drehachse erfolgt.

Bewegt sich nun die Kodierscheibe und damit die Drehachse beider Spuren aufgrund des mechanischen Schlags in tangentialer Richtung zur Lichtquelle, bewegt sich - wie oben beschrieben - die Beleuchtung auf der Maßspur bzw. der Beleuchtungsspot parallel zur Verschiebung mit. Dabei wird unabhängig vom Schlag der Kodierscheibe die Maßspur immer an im Wesentlichen derselben tangentialen Position beleuchtet. Der potentielle Winkelfehler bzw. Winkelmessfehler kann somit optisch kompensiert werden, so dass der korrekte Winkel ausgelesen werden kann.

Die diffraktive Kompensationsspur kann bevorzugt in einem Herstellungsprozess bzw. gleichzeitig mit der eigentlichen diffraktiven Maßspur auf die Kodierscheibe aufgebracht werden. Dadurch können beide Spuren hochgenau zueinander zentriert bzw. ausgerichtet werden. Dies ermöglicht eine insbesondere justagefreie Montage der Kodierscheibe.

Je nach Bauweise des Drehwinkelsensors bzw. des Drehgebers (z.B. Auflicht, Durchlicht, etc.) können die Anordnung von Maßspur und Kompensationsspur sowie die Strahlführung und/oder die Umlenkung variabel angepasst werden.

Wie bereits oben ausgeführt kann die Kompensationsspur derart ausgelegt sein, dass Licht, welches normal (in Bezug auf die Ebene der Kodierscheibe) auf einen Bereich der Kompensationsspur einfällt, in Beugungsordnungen aufgespaltet wird. In diesem Fall beträgt der vorgegebene Beleuchtungswinkel somit im Wesentlichen 90°. Der Beleuchtungswinkel wird als der Winkel zwischen der optischen Achse der Beleuchtungslicht bzw. Beleuchtungsstrahl und der Ebene der Kodierscheibe definiert. Der Beleuchtungswinkel kann verstellbar sein.

Ebenfalls kann die Kompensationsspur derart ausgelegt sein, dass die Strahlen der ersten Beugungsordnung (N=1) direkt oder indirekt mittels einer Umlenkvorrichtung auf die Maßspur gerichtet bzw. fokussiert werden.

Der Radius und/oder die Breite der Kompensationsspur können in Abhängigkeit von dem jeweiligen Einsatzgebiet variieren. So kann der Radius der Kompensationsspur gleich oder kleiner als ca. 500 mm sein, und insbesondere in Bereich von ca. 3 mm bis ca. 15 mm, vorzugsweise von ca. 5 bis ca. 10 mm, besonders bevorzugt bei ca. 8 mm liegen. Die Breite der Kompensationsspur kann z.B. in dem Bereich von ca. 0,5 bis ca. 5 mm, bevorzugt in dem Bereich von ca. 1 bis ca. 3 mm, besonders bevorzugt bei ca. 2 mm liegen.

Die Maßspur der Kodierscheibe kann (z.B. in an sich bekannterweise) geeignet strukturiert bzw. kodiert werden, so dass bei einer Beleuchtung der Maßspur, insbesondere bei einer Beleuchtung eines Abtastbereichs der Maßspur, zumindest ein optischer Messstrahl erzeugt bzw. generiert wird, wobei zumindest ein optischer Parameter (z.B. Intensität, Phase, etc.) des Messstrahls direkt oder indirekt in Abhängigkeit von dem zu messenden Winkel moduliert wird. Der (beleuchtete) Abtastbereich kann z.B. ein im Wesentlichen kreisförmiger Bereich sein, wobei der Durchmesser des Abtastbereichs im Wesentlichen gleich oder kleiner als die Breite der Maßspur sein kann. Der Abtastbereich kann zum Beispiel einen Durchmesser von ca. 25 µm bis ca. 10 µm aufweisen.

Die Maßspur kann eine diffraktive Maßspur sein bzw. eine diffraktive Struktur aufweisen. Insbesondere kann die Maßspur zumindest ein Beugungsgitter umfassen. Zumindest ein Teil der mittels der diffraktiven Maßspur abgespalteten bzw. gebeugten Strahlen der N-ten (z.B. der ersten) Beugungsordnung, welche somit den Messstrahl bzw. die Messstrahlen bilden, können mittels eines oder mehreren Fotodetektoren detektiert werden und direkt oder indirekt einer bestimmten Winkelstellung zugeordnet werden. Das Beugungsgitter kann ein Reflektionsgitter oder ein Transmissionsgitter sein. Vorzugsweise umfasst die Maßspur zumindest zwei unterschiedliche Beugungsgitter, welche zwei unterschiedliche (z.B. phasenversetzte) Signale erzeugen.

Vorzugsweise ist die Maßspur derart ausgelegt, dass eine radiale Verschiebung der Kodierscheibe (in Bezug auf die Beleuchtung oder in Bezug auf die Wellenachse) keine Signaländerung bewirkt. So können zum Beispiel die einzelnen Beugungsgitter, welche die Maßspur bilden, entsprechend dem Krümmungsradius gekrümmt werden, was zu einer konstanten Ablenkung des Lichts bezüglich der Winkelstellung führt. Die gesamte Abfolge der diffraktiven Beugungsgitter kann in Polarkoordinaten dargestellt und entsprechend hergestellt werden.

Der Radius und/oder die Breite der Maßspur können in Abhängigkeit von dem jeweiligen Einsatzgebiet variieren. So kann der Radius der Maßspur zum Beispiel gleich oder kleiner als ca. 500 mm sein, und insbesondere in Bereich von ca. 10 mm bis ca. 20 mm, vorzugsweise von ca. 10 mm bis ca. 15 mm, besonders bevorzugt bei ca. 13 mm liegen. Die Breite der Maßspur kann z.B. in dem Bereich von ca. 0,3 bis 3 mm, bevorzugt in dem Bereich von ca. 0,5 bis 2 mm, besonders bevorzugt bei ca. 1 mm liegen.

Vorzugsweise sind die Maßspur und die Kompensationsspur ringförmig ausgebildet. Die ringförmigen Maß- und Kompensationsspur sind insbesondere jeweils durch zwei konzentrische Kreise begrenzt. Der Radius des äußeren Kreises gibt den Radius der jeweiligen Spur vor. Die Breite der jeweiligen Spur entspricht dem Unterschied zwischen dem Radius des äußeren Kreises und dem Radius des inneren Kreises, welche die jeweilige Spur begrenzen. Das gemeinsame Zentrum der Kompensations- und der Maßspur fällt mit dem Zentrum bzw. dem Mittelpunkt des Kreises bzw. des Rings zusammen.

Der Radius der Kompensationsspur kann kleiner als der Radius der Maßspur sein. Es ist jedoch möglich, dass der Radius der Maßspur kleiner als der Radius der Kompensationsspur ist. Ebenfalls ist es möglich, dass der Radius der Kompensationsspur und der Maßspur gleich sind.

Die Kodierscheibe kann eine Reflektions- oder eine Transmissionskodierscheibe sein. Die Kodierscheibe kann in Durchlicht oder in Auflicht ausgelesen werden.

Ein zweiter Aspekt der Erfindung betrifft einen optischen Drehwinkelsensor bzw. Drehgeber umfassend:
die (verbesserte) Kodierscheibe gemäß einer bevorzugten Ausführungsform der Erfindung;
eine optische bzw. opto-elektronische Abtastvorrichtung, welche derart ausgelegt ist, einen Abtastbereich der Maßspur der Kodierscheibe zu beleuchten.

Die Abtastvorrichtung umfasst
eine Beleuchtungsvorrichtung, welche derart ausgelegt ist, einen Bereich der Kompensationsspur der Kodierscheibe mit Licht (Ausleselicht) zu beleuchten, Das Licht kann kohärentes oder inkohärentes Licht sein, welches unter einen vorgegebenen bzw. festen bzw. festgelegten oder vorgebbaren (einstellbaren) Beleuchtungswinkel die Kompensationsspur bzw. auf einen Bereich der Kompensationsspur einfällt. Der Abtastbereich der Maßspur wird dabei durch zumindest einen Teil eines mittels Beleuchtung der Kompensationsspur erzeugten bzw. generierten und vorzugsweise mittels einer Umlenkvorrichtung auf die Maßspur umgelenkten Strahls beleuchtet.

Die Abtastvorrichtung kann ferner eine Umlenkvorrichtung umfassen, welche derart ausgelegt und angeordnet ist, den zumindest einen Strahl, welcher durch Beleuchtung der Kompensationsspur erzeugt bzw. generiert wird, auf den Abtastbereich der Maßspur umzulenken.

Wie bereits oben beschrieben kann die Kompensationsspur eine diffraktive Struktur aufweisen. Der zumindest eine Strahl, welcher durch Beleuchtung der Kompensationsspur erzeugt bzw. generiert wird, kann durch zumindest einen Teil der durch Beugung an der Kompensationsspur aufgespalteten Strahlen (S1) der N-ten Beugungsordnung formiert bzw. ausgebildet sein. Anders ausgedrückt kann der zumindest eine Strahl, welcher durch Beleuchtung der Kompensationsspur erzeugt bzw. generiert wird, zumindest einen Teil der durch Beugung an der Kompensationsspur aufgespalteten Strahlen der N-ten Beugungsordnung, wobei N eine ganze Zahl ist, umfassen.

Wie bereits oben beschrieben, ermöglicht der erfindungsgemäße Drehgeber eine optische Korrektur des Winkelmessfehlers, insbesondere des durch den Schlag der Kodierscheibe und der damit verbundenen tangentialen Dezentrierung der Kodierscheibe in Bezug auf die Welle bedingten Winkelmessfehlers, und zwar dadurch, dass der fokussierte Lichtspot der Beleuchtung (Beleuchtungsspot) mit der tangentialen Bewegung der diffraktiven Maßspur bzw. der Kodierscheibe "mitgeführt" wird. Dies wird insbesondere durch die (z.B. diffraktive) Kompensationsspur erreicht, welche zentriert bzw. konzentrisch zur Maßspur, vorzugsweise auf einem anderen radialen bzw. Radiusbereich der (sich drehenden) Kodierscheibe angeordnet bzw. aufgebracht ist. Die durch die Kompensationsspur abgelenkten Strahlen (z. B. die Strahlen der N-ten (z.B. der ersten) Beugungsordnung bei einer diffraktiven Kompensationsspur) werden direkt oder indirekt, d.h. mittels einer geeigneten Umlenkvorrichtung auf die Maßspur gerichtet bzw. fokussiert. Damit kann sichergestellt werden, dass die direkt oder indirekt durch die Umlenkvorrichtung auf die Maßspur gerichteten Strahlen, die Maßspur immer an im wesentlich derselben tangentialen Position beleuchten. Der potentielle Winkelfehler bzw. Winkelmessfehler kann somit optisch kompensiert bzw. korrigiert werden. In einem Beispiel werden durch die Kompensationsspur abgelenkten Strahlen (bzw. die durch Beleuchtung der Kompensationsspur erzeugten Strahlen) unabhängig von der tangentialen Dezentrierung der Kodierscheibe direkt oder indirekt in Richtung des gemeinsamen Zentrums der Maß- und der Kompensationsspur gelenkt. Vorzugsweise ist die Abtastvorrichtung und insbesondere sind die Kompensationsspur und/oder die Umlenkvorrichtung derart ausgelegt und angeordnet, dass die Richtung des durch die Kompensationsspur abgelenkten Beleuchtungslichts (Ausleselichts) einen Schnittpunkt mit der Achse durch das gemeinsame Zentrum von Kompensationsspur und Maßspur besitzt und der Abstand zwischen der Kompensationsspur und diesem Schnittpunkt der Länge des Lichtwegs zwischen der Kompensationsspur und der Maßspur entspricht.

Je nach Bauweise des Drehwinkelsensors bzw. des Drehgebers (z.B. Auflicht, Durchlicht, etc.) können die Anordnung von Maßspur und Kompensationsspur sowie die Strahlführung der Umlenkung variabel angepasst werden.

Die Umlenkvorrichtung kann ein oder mehrere optische oder opto-elektronische Komponente umfassen. So kann die Umlenkvorrichtung zumindest einen Spiegel, und/oder zumindest ein Prisma, insbesondere ein Retropisma, und/oder zumindest eine Linse, und/oder andere optische und/oder opto-elektronische Komponente umfassen.

Die optische bzw. opto-elektronische Abtastvorrichtung kann ferner eine Lichtquelle (z.B. ein Laser- und/oder ein Leuchtdiode und/oder eine andere Lichtquelle) sowie gegebenenfalls weitere optische Elemente (z.B. einen Kollimator und/oder eine Fokusiervorrichtung mit einer oder mehreren Linsen, etc.) umfassen. Die Lichtquelle kann eine feststehende Lichtquelle sein, insbesondere eine bezüglich ihrer räumlichen Position (und insbesondere bezüglich ihrer räumlichen Position zur Wellenachse) feststehende Lichtquelle sein. Vorzugsweise ist die Umlenkvorrichtung (zumindest in Teilen) feststehend relativ zu der Lichtquelle.

Ferner bevorzugt ist die Abtastvorrichtung derart ausgelegt, dass die optische Weglänge von der Kompensationsspur zur Maßspur der optischen Weglänge von der Kompensationsspur zur deren Drehachse entspricht. Die Drehachse der Kompensationsspur verläuft durch das Drehzentrum der Kompensationsspur (und somit auch durch das Drehzentrum der Maßspur. Somit kann erzielt werden, dass die Beleuchtung der Maßspur auf tangentialer Höhe ihrer Drehachse erfolgt.

Ferner kann der optische Drehwinkelsensor bzw. Drehgeber eine Detektionsvorrichtung umfassen, wobei die Detektionsvorrichtung derart ausgelegt ist, zumindest einen Teil des zumindest einen durch einer Beleuchtung der Maßspur erzeugten bzw. generierten optischen Messstrahls zu detektieren.

Die Detektionsvorrichtung kann ein oder mehreren Fotodetektoren oder Fotodetektorenarrays (z.B. Fotodioden, Fototransistoren, CCD-Kamera(s) usw.) umfassen. Die Detektionsvorrichtung kann ferner weitere optische und/oder optoelektronische Elemente (z.B. ein oder mehrere Spiegel, Linsen, Prismen, Filter, etc.) umfassen.

Ferner kann der optischer Drehgeber eine Signalauswertevorrichtung umfassen, wobei die Signalauswertevorrichtung derart ausgelegt ist, anhand des von der Detektionsvorrichtung generierten Signals bzw. der von der Detektionsvorrichtung generierten Signale, den zu messenden absoluten oder relativen Winkel zu ermitteln. Anders ausgedrückt kann die Signalauswertungsvorrichtung derart ausgelegt sein, das von der Detektionsvorrichtung generierte Signal bzw. die von der Detektionsvorrichtung generierten Signale direkt oder indirekt einer bestimmten Winkelstellung bzw. Drehbewegung der Kodierscheibe und somit der Welle zuzuordnen.

Der optische Drehwinkelsensor bzw. Drehgeber kann in Durchlicht (z.B. nach dem Lichtschrankenprinzip, Moire, etc.), in Reflektion und/oder auf Basis diffraktiver Ablenkung (Beugung) betrieben werden. Insbesondere kann der optische Drehgeber ein Auflicht- oder ein Durchlichtdrehgeber sein.

Das oben beschriebene Winkelfehler-Kompensationsprinzip lässt sich sowohl für rein inkrementale als auch für absolut kodierte Drehwinkelsensoren bzw. Drehgebern anwenden. So kann der optische Drehgeber ein inkrementaler oder ein absolut kodierter (absoluter) Drehgeber sein.

Ein weiterer Aspekt der Erfindung betrifft ein Verfahren zur (optischen) Korrektur bzw. Kompensation eines Winkelmessfehlers in einem optischen Drehgeber, insbesondere eines Winkelmessfehlers, welcher durch eine Verschiebung bzw. Dezentrierung der Kodierscheibe des optischen Drehgebers bedingt ist. Das Verfahren umfasst die Schritte:
- Bereitstellen einer (verbesserten) Kodierscheibe gemäß einer bevorzugten Ausführungsform der Erfindung;
- Beleuchten eines Bereichs der Kompensationsspur mit Licht bzw. mit einem Lichtspot unter einem vorgegebenen Beleuchtungswinkel; wobei zumindest ein Strahl erzeugt bzw. generiert wird; und
- Umlenken zumindest eines Teils des durch Beleuchtung an der Kompensationsspur generierten bzw. erzeugten Strahls derart, dass ein Abtastbereich der Maßspur durch zumindest einen Teil des umgelenkten Strahls beleuchtet wird.

Das Verfahren kann ferner ein Detektieren von zumindest einem Teil zumindest eines durch die Beleuchtung des Abtastbereichs der Maßspur erzeugten bzw. generierten Messstrahls umfassen. Somit wird zumindest ein entsprechendes Detektionssignal erzeugt bzw. generiert. Ferner kann das Verfahren ein Auswerten des zumindest einen Detektionssignals und/oder ein Ermitteln eines absoluten oder relativen Winkel aufweisen, wobei der ermittelte Winkel direkt oder indirekt einer bestimmten Winkelstellung bzw. Drehbewegung der Kodierscheibe und somit der Welle zugeordnet werden kann.

Ein weitere Aspekt der Erfindung betrifft eine Anordnung zur Verwendung in optischen Drehgebern zur optischen Kompensation des entstehenden Winkelmessfehlers bei Versatz zwischen der Drehachse und dem Zentrum der Maßverkörperung, wobei
konzentrisch zu einer Maßspur eine Kompensationsspur auf einer Kodierscheibe angeordnet ist; und wobei die Anordnung derart ausgelegt ist, dass
ein Ausleselicht zunächst auf die Kompensationsspur fällt;
die Kompensationsspur das Ausleselicht radial in Richtung der Achse durch das gemeinsame Zentrum vom Kompensations- und Maßspur ablenkt;
das abgelenkte Ausleselicht von mindestens einer, relativ zu einer Lichtquelle feststehenden optischen oder opto-elektronischen Vorrichtung (Unmlenkvorrichtung) umgelenkt wird;
das so umgelenkte Ausleselicht auf die Maßspur trifft;
die Anordnung von Komponenten derart gewählt wird, dass die Maßspur vom Ausleselicht unabhängig vom Versatz immer an derselben Winkelposition in der Maßspur beleuchtet wird, solange der Drehwinkel der Kodierscheibe konstant ist.

Vorzugsweise besitzt die Richtung des durch die Kompensationsspur abgelenkten Ausleselichts einen Schnittpunkt mit der Achse durch das gemeinsame Zentrum von Kompensationsspur und Maßspur, wobei der Abstand zwischen der Kompensationsspur und diesem Schnittpunkt der Länge des Lichtwegs zwischen der Kompensationspur und der Maßspur entspricht. Das Ausleselicht kann kohärent oder inkohärent sein. Der Radius der Kompensationsspur kann kleiner, größer oder gleich dem Radius der Maßspur sein.

Ferner betrifft ein Aspekt der Erfindung eine Verwendung einer Kodierscheibe gemäß einem bevorzugten Beispiel der Erfindung in einem optischen Drehgeber, wobei die Verwendung der Kodierscheibe derart erfolgt, dass Beleuchtungslicht, welches auf einen Bereich der Kompensationsspur einfällt, durch die Kompensationsspur abgelenkt wird und wobei zumindest ein Teil des abgelenkten Beleuchtungslichts, vorzugsweise nach einer Umlenkung mittels einer Umlenkvorrichtung, einen Abtastbereich der Maßspur beleuchtet. Bei der Beleuchtung des Abtastbereichs der Maßspur wird zumindest ein optischer Messstrahl erzeugt, wobei zumindest ein optischer Parameter des Messstrahls in Abhängigkeit von dem zu messenden Winkel moduliert wird.

Mit Hilfe der erfindungsgemäßen Kodierscheibe, und/oder des erfindungsgemäßen optischen Drehgebers und/oder des Verfahrens zur Kompensation des Winkelmessfehlers in einem optischen Drehgeber kann das Problem des auftretenden Winkelmessfehlers in optischen Drehgebern bei Schlag der Kodierscheibe durch ein rein optisches Prinzip im Wesentlichen behoben werden. Die Kompensation des Schlags bzw. der Dezentrierung der Kodierscheibe in Bezug auf die Wellenachse erfolgt somit bereits vor der Ermittlung des Winkelsignals. Es sind grundsätzlich keine zusätzlichen optischen Ausleseeinheiten oder elektronischen Komponenten vonnöten, was zu einer Vereinfachung der Konstruktion des Drehgebers und/oder des Verfahrens zum Ermitteln des korrekten Winkels führt. Ferner kann der relativ hohe (zum Teil manuellen) Aufwand für eine genaue Justierung der Kodierscheibe in Bezug auf die Welle erheblich verringert oder vermieden werden. Somit kann ein absoluter oder inkremental kodierter optischer Drehwinkelsensor bzw. Drehgeber, insbesondere ein Drehgeber auf Basis einer diffraktiver Maßverkörperung, insbesondere mit justagefreier Montage ermöglicht werden.

Das oben beschriebene Winkelfehler-Kompensationsprinzip lässt sich sowohl auf optische Drehgeber auf Basis diffraktiver Ablenkung, als auch auf optische Drehgeber, welche auf andere optische Prinzipe (wie z.B. Moire, Lichtschranke, etc.) basieren, anwenden. Vorzugsweise werden dabei die Kompensationsspur und die Maßspur in einem Arbeitsgang gefertigt bzw. angebracht, um eine zentrische bzw. konzentrische Anordnung der beiden Spuren zu gewährleisten.

Weiteren Aufgaben, Merkmale und Vorteile der vorliegenden Erfindung werden offensichtlich aus einer detaillierten Beschreibung bevorzugter Ausführungsformen der vorliegenden Erfindung mit Bezug auf die Zeichnungen. Es zeigen:
Fig. 1 ein Kompensationsschema des Winkelmessfehlers gemäß einem erfindungsgemäßen Beispiel, wobei
   Fig. 1a einen unkompensierten Drehgeber zeigt; und
   Fig. 1b einen kompensierten Drehgebers zeigt;
Fig. 2 eine schematische Ansicht eines kompensierten Drehgebers gemäß einem erfindungsgemäßen Beispiel;
Fig. 3 eine schematische Darstellung des Aufbaus und der Anordnung der Maß- und Kompensationsspuren der Kodierscheibe des in Fig. 2 gezeigten Drehgebers, wobei
   Fig. 3a eine Ansicht eines Teilabschnitts der Kodierscheibe von oben zeigt;
   Fig. 3b eine vergrößerte Ansicht eines Teilabschnitts der Maßspur zeigt; und
   Fig. 3c eine vergrößerte Ansicht eines Teilabschnitts der Kompensationsspur zeigt.

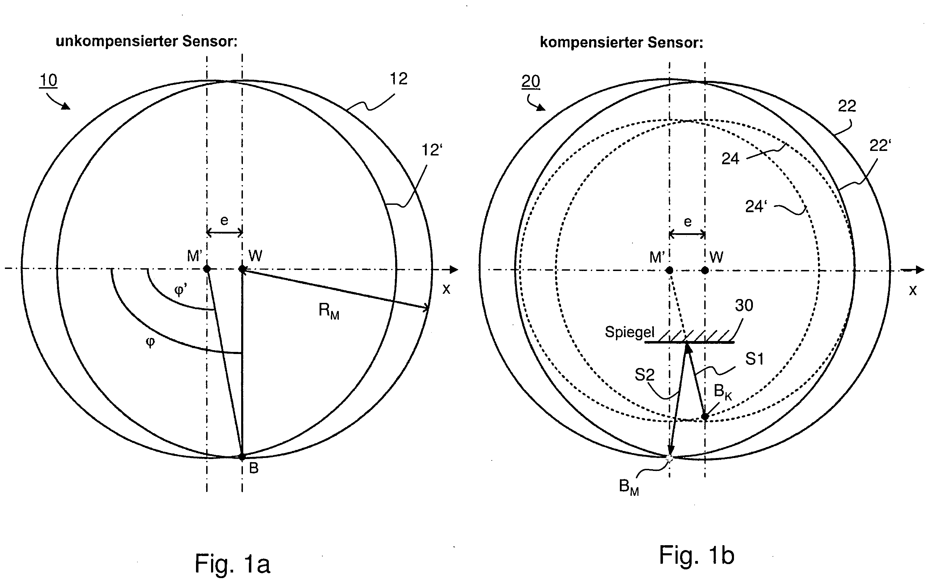

Das Prinzip der Winkelmessung und -korrektur eines bevorzugten Drehwinkelsensors bzw. Drehgebers ist schematisch in **Fig. 1** dargestellt, wobei **Fig. 1a** das Prinzip der Winkelmessung eines herkömmlichen, unkompensierten Drehwinkelsensors bzw. Drehgebers und **Fig. 1b** das Prinzip der Winkelmessung und der optischen Winkelkorrektur eines kompensierten Drehwinkelsensors bzw. Drehgebers gemäß einem Beispiel der Erfindung zeigt.

Die Kodierscheibe 10 eines unkompensierten Drehgebers weist eine kreis- bzw. ringförmige Maßspur 12 mit einem Radius R_{M} auf. Das Zentrum der Maßspur fällt mit dem Mittelpunkt der kreis- bzw. ringförmigen Maßspur zusammen. Die Kodierscheibe 10 ist drehbar bzw. rotierbar um eine Wellenachse gelagert. Die Wellenachse ist normal zur Zeichenebene bzw. normal zur Ebene der Kodierscheibe bzw. zu den Oberflächen der (scheiben- bzw. diskförmigen) Kodierscheibe und verläuft durch den Mittelpunkt der Welle W. Wenn keine tangentiale Dezentrierung der Kodierscheibe zu der Wellenachse vorliegt, fällt das Zentrum der Maßspur M mit dem Mittelpunkt der Welle W zusammen. Bei einer durch den Schlag der Kodierscheibe hervorgerufenen tangentialen Dezentrierung der Kodierscheibe in Bezug auf die Welle bzw. auf die Wellenachse, befindet sich das Zentrum M' der dezentrierten Maßspur 12' in einem Abstand "e" in tangentialer Richtung "x" von dem Mittelpunkt der Welle W.

Das von einer (feststehenden) Beleuchtungsquelle ausgestrahlte Beleuchtungslicht (Ausleselicht) tritt unter einen vorgegebenen oder vorgebbaren Winkel (z.B. senkrecht bzw. normal bzw. in axialer Richtung) auf die Maßspur 12. Ein Abtastbereich der Maßspur wird somit durch einen Beleuchtungsspot B beleuchtet.

Bei einer tangentialen Dezentrierung der Maßspur 12 wird die dezentrierte Maßspur 12' in einem anderen tangentialen (Abtast-) Bereich als die nicht dezentrierte Maßspur beleuchtet. Somit wird anstelle des korrekten bzw. wahren Winkels ϕ der Winkel ϕ' ermittelt. Es entsteht ein Winkelmessfehler (ϕ - ϕ').

Der kompensierte Drehgeber gemäß einem erfindungsgemäßen Beispiel weist eine (scheiben- bzw. diskförmige) Kodierscheibe 20 auf, welche zusätzlich zu einer ring- bzw. kreisförmigen Maßspur 22 eine kreis- bzw. ringförmige, diffraktive Kompensationsspur 24 aufweist. Die Kompensationsspur ist zentral bzw. konzentrisch zur Maßspur 22 in einem anderen bzw. unterschiedlichen radialen Bereich der Kodierscheibe 20 angeordnet. Bei dem in **Fig. 1b** dargestellten Kodierscheibe 20 ist der Radius der Kompensationsspur 24 kleiner als der Radius der Maßspur 22. Das Drehzentrum bzw. Zentrum der Maßspur fällt mit dem Drehzentrum bzw. Zentrum der Kompensationsspur und mit dem Mittelpunkt der kreis- bzw. ringförmigen Maß- und Kompensationsspur zusammen. Mit anderen Worten weisen die Maß- und Kompensationsspur ein gemeinsames Drehzentrum bzw. Zentrum bzw. Mittelpunkt M auf.

Die Kodierscheibe ist drehbar bzw. rotierbar um eine Wellenachse gelagert. Wenn keine tangentiale Dezentrierung der Kodierscheibe zu der Wellenachse vorliegt, fällt - wie in Zusammenhang mit **Fig. 1** ausgeführt - das gemeinsame Zentrum der Maß- und Kompensationsspur M mit dem Mittelpunkt der Welle W zusammen. Bei einer durch den Schlag der Kodierscheibe hervorgerufenen tangentialen Dezentrierung der Kodierscheibe in Bezug auf die Welle bzw. auf die Wellenachse befindet sich das gemeinsame Zentrum M' der dezentrierten Maß- und Kompensationsspur in einem Abstand "e" in tangentialer Richtung "x" von dem Mittelpunkt der Welle W.

Ferner ist in **Fig. 1b** der Strahlengang der Beleuchtung bei einer tangentialen Dezentrierung "e" der Kodierscheibe 20 zur Wellenachse schematisch dargestellt. Durch das einfallende Beleuchtungslicht bzw. Beleuchtungsstrahl wird ein (bestimmter) Bereich der dezentrierten Kompensationsspur 24' durch einen Beleuchtungsspot B_{K} beleuchtet. Der Durchmesser des Beleuchtungsspots bzw. des beleuchteten Bereichs der Kompensationsspur kann im Wesentlichen gleich oder kleiner als die Breite der Kompensationsspur sein. Vorzugsweise beträgt der Durchmesser des beleuchteten Bereichs der Kompensationsspur ca. 25 µm bis 2 mm, vorzugsweise ca. 0,1 mm bis 1 mm, besonders bevorzugt ca. 0,5 mm. Die Kompensationsspur 24 kann insbesondere durch einen Lichtspot, z.B. durch einen fokussierten, beugungsbegrenzten Lichtspot beleuchtet werden.

Das auf die dezentrierte Kompensationsspur 24' unter einen vorgegebenen Winkel (z.B. in axialer Richtung) einfallende Beleuchtungslicht bzw. der einfallende Beleuchtungsstrahl wird durch die dezentrierte Kompensationsspur 24' in Beugungsordnungen aufgespaltet. Durch eine geeignete Auswahl der Wellenlänge und/oder der Gitterkonstante der diffraktiven Kompensationsspur wird erreicht, dass die Strahlen der ersten Beugungsordnung S1 (insbesondere unabhängig von der tangentialen Dezentrierung der Kompensations- und der Maßspur) in Richtung des gemeinsamen Zentrums der Kompensationsspur und der Maßspur abgelenkt werden. Mittels einer optischen Umlenkvorrichtung umfassend einen Spiegel 30 und gegebenenfalls weiteren optischen Elementen werden die Strahlen der ersten Beugungsordnung S1 umgelenkt und auf die (gegebenenfalls dezentrierte) Maßspur gerichtet. Ein Abtastbereich der Maßspur wird durch die umgelenkten Strahlen S2 der ersten Beugungsordnung (oder zumindest durch einen Teil der umgelenkten Strahlen der ersten Beugungsordnung) beleuchtet. Durch die umgelenkten Strahlen S2 der ersten Beugungsordnung entsteht einen Beleuchtungsspot B_{M}, durch welchen die dezentrierte Maßspur 22' bzw. ein Abtastbereich der dezentrierten Maßspur 22' beleuchtet wird.

Die Beleuchtung bzw. der Beleuchtungsspot B_{M} auf der Maßspur bewegt sich mit der Verschiebung der Kodierscheibe 20 (und damit der gemeinsamen Achse beider Spuren) aufgrund des mechanischen Schlags in tangentialer Richtung zur Lichtquelle parallel zur Verschiebung der Kodierscheibe 20. Unabhängig vom Schlag der Kodierscheibe 20 wird die Maßspur 22 jedoch immer an im Wesentlichen derselben tangentialen Position beleuchtet. Der potentielle Winkelmessfehler kann damit optisch kompensiert werden, so dass der korrekte Winkel ausgelesen werden kann.

Die Umlenkung kann derart gestaltet werden, dass die optische Weglänge von der Kompensationsspur 24 bzw. 24' zur Maßspur 22 bzw. 22' der optischen Weglänge von der Kompensationsspur zu deren Drehachse entspricht. Dies hat zur Folge, dass die Beleuchtung der Maßspur 22 immer auf tangentialer Höhe ihrer Drehachse erfolgt.

Die von der Maßspur 22 gebeugten Strahlen werden durch eine Detektionsvorrichtung (in **Fig. 1** nicht dargestellt) mit einen oder mehreren Fotodetektoren erfasst bzw. detektiert.

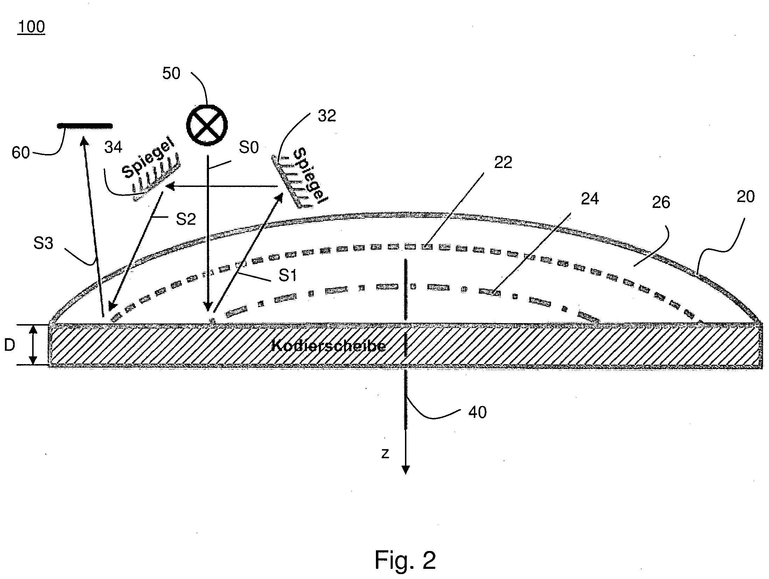

**Fig. 2** zeigt eine schematische Ansicht eines Drehwinkelsensors bzw. Drehgebers 100 gemäß einem Beispiel der Erfindung. Der Drehgeber 100 umfasst eine scheiben- bzw. diskförmige, runde Kodierscheibe 20 mit konstanter Dicke. Die Kodierscheibe 20 ist auf eine Welle 40 gelagert. Die Kodierscheibe 20 kann drehbar in einem Gehäuse (in den Figuren nicht gezeigt) gelagert werden.

Die Kodierscheibe 20 kann eine transparente Scheibe, z.B. eine Glas- oder eine Kunststoffscheibe sein. Die Dicke D der Kodierscheibe in axialer Richtung "z" kann z.B. ca. 0,5 bis ca. 3 mm betragen.

Auf einer der Oberflächen 26 der Kodierscheibe 20 sind eine kreis- bzw. ringförmige, diffraktive Kompensationsspur 24 und eine kreis- bzw. ringförmige, diffraktive Maßspur 22 aufgebracht bzw. vorgesehen. Die Kompensationsspur 24 und die Maßspur 22 sind jeweils in unterschiedlichen radialen Bereichen der Kodierscheibe 20 angeordnet. Bei dem in **Fig. 2** gezeigten Beispiel ist der Radius der Kompensationsspur 24 kleiner als der Radius der Maßspur 22.

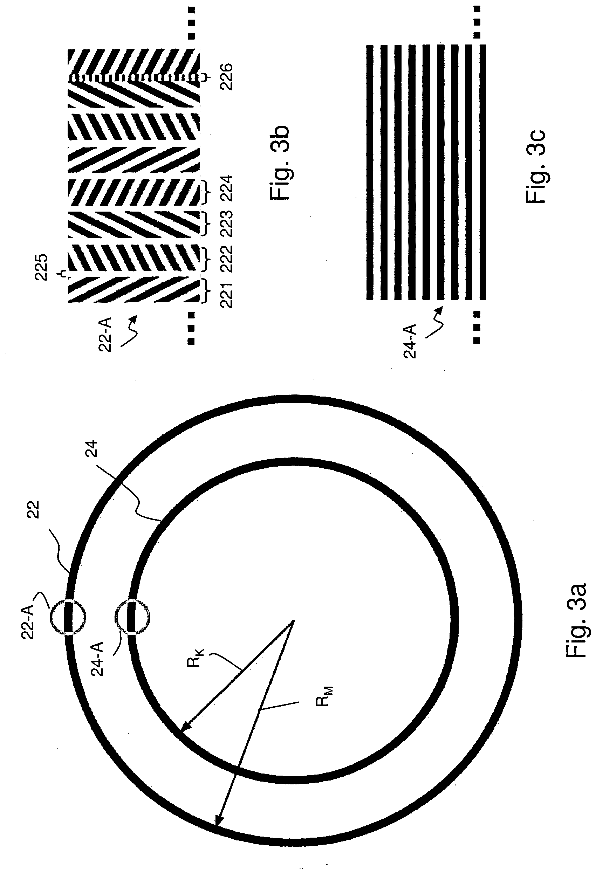

Die Kompensationsspur 24 kann als ein reflektives Beugungsgitter (Reflektionsgitter) ausgebildet werden. Die Maßspur 22 kann als eine reflektive Gitterstruktur ausgebildet werden. Es ist jedoch ebenfalls möglich, die Kompenstations- und die Maßspur 24, 22 als Transmissionsgitter bzw. als transmissive Gitterstrukturen auszubilden. Der Aufbau der Maßspur 22 und der Kompensationsspur 24 gemäß einer Ausführungsform werden nachfolgend in mehr Detail in Zusammenhang mit **Fig. 3a bis 3c** beschrieben.

Der Drehgeber 100 weist ferner eine Beleuchtungsvorrichtung mit einer Lichtquelle 50 auf. Als Lichtquelle 50 können zum Beispiel ein oder mehrere Laser- oder Leuchtdioden oder andere Quelle von kohärentem oder inkohärentem Licht eingesetzt werden. Das von der Lichtquelle 50 ausgestrahlte Beleuchtungslicht kann mittels eines Kollimators (nicht gezeigt in **Fig. 2**) kollimiert werden und/oder mittels einer oder mehreren Linsen und gegebenenfalls weiteren optischen Elementen (nicht gezeigt in **Fig. 2**) auf die Kompensationsspur 124 fokussiert bzw. gebündelt werden.

Die Kompensationsspur 24 der Kodierscheibe 20 wird durch einen Beleuchtungsstrahl 32 normal bzw. in axialer Richtung "z" beleuchtet. Das auf die Kompensationsspur 24 einfallende Beleuchtungslicht (Ausleselicht) S0 wird durch die diffraktive Kompensationsspur 24 gebeugt. Durch eine geeignete Auswahl der Wellenlänge des Beleuchtungslichts und/oder der Gitterkonstante der diffraktiven Kompensationsspur 24 wird erreicht, dass die Strahlen der ersten Beugungsordnung S1 in Richtung des gemeinsamen Zentrums der Kompensationsspur 24 und der Maßspur 22 abgelenkt werden. Mittels einer optischen Umlenkvorrichtung umfassend einen ersten Spiegel 32 und einen zweiten Spiegel 34 und gegebenenfalls weitere optischen Elementen werden die Strahlen der ersten Beugungsordnung S1 der Kompensationsspur umgelenkt und auf die Maßspur fokussiert. Die Umlenkung kann derart gestaltet werden, dass die optische Weglänge von der Kompensationsspur 24 zur Maßspur 22 der optischen Weglänge von der Kompensationsspur 24 zu deren Drehachse entspricht. Dies hat zur Folge, dass die Beleuchtung S2 der Maßspur 22 immer auf tangentialer Höhe ihrer Drehachse erfolgt. Die von der Maßspur gebeugten Strahlen S3 (d.h. die Messstrahlen) werden durch eine Detektionsvorrichtung 50mit einem oder mehreren Fotodetektoren erfasst bzw. detektiert.

**Fig. 3** zeigt eine schematische Darstellung des Aufbaus und der Anordnung der Maß- und der Kompensationsspur und einer der Kodierscheibe gemäß einer Ausführungsform, wobei **Fig. 3a** eine Ansicht eines Teilabschnitts der Kodierscheibe von oben zeigt; **Fig. 3b** eine vergrößerte Ansicht eines Teilabschnitts der Maßspur zeigt; und **Fig. 3c** eine vergrößerte Ansicht eines Teilabschnitts der Kompensationsspur zeigt.

Wie bereits in Zusammenhang mit **Fig. 1** **und** **2** ausgeführt, weist die Kodierscheibe eine kreis- bzw. ringförmige Kompensationsspur 24 und eine kreis- bzw. ringförmige Maßspur 22 auf, welche in unterschiedlichen radialen Bereichen der Kodierscheibe angeordnet sind. In einem Beispiel ist der Radius der Kompensationsspur gleich etwa 8 mm und der Radius der Maßspur etwa 13 mm. Die Breite der Kompensationsspur kann ca. 2 mm und die Breite der Maßspur kann ca. 1 mm betragen.

Die Maßspur 22 kann (z.B. in an sich bekannterweise) geeignet (mikro)strukturiert werden, so dass ein oder mehrere optische Parameter (z.B. Intensität, Phase, etc.) des von der Maßspur 22 reflektierten (bzw. des durch die Maßspur durchtretenden und/oder des durch die Maßspur gebeugten) Lichtstrahls bzw. Lichtstrahlen in Abhängigkeit von dem gemessenen Winkel moduliert wird. Mittels einer Singalauswertevorrichtung kann aus den detektierten Signalen Winkelinformation gewonnen werden.

Die Maßspur 22 kann eine oder mehrere Beugungsgitter (z.B. Reflektionsgitter oder Transmissionsgitter) umfassen. Die in Fig. 3c gezeigte Maßspur ist als einen ringförmigen Muster bzw. eine ringförmige Gitterstruktur umfassend vier unterschiedlichen, diffraktiven, verschachtelten Beugungsgitter (in dem konkreten Beispiel Reflektionsgitter) 221, 222, 223 und 224 ausgebildet. Die einzelnen Beugungsgitter 221, 222, 223, 224 werden jeweils durch nicht strukturierte Felder 225 getrennt. Wenn sich die Struktur aus wechselnden Feldern mit und ohne Gitterstruktur durch den Beleuchtungsspot (z. B. durch einen fokussierten, beugungsbegrenzten Spot eines Laser- oder Leuchtdioden oder einer anderer Quelle kohärentes Beleuchtungslichts) bewegt, wird jeweils ein moduliertes Signal an der Position der ersten Beugungsordnung der jeweiligen Beugungsgitter erzeugt. Durch eine geeignete Wahl der unterschiedlichen Beugungsgitter können die ersten Beugungsordnungen der vier Beugungsgitter von einander räumlich getrennt werden. Dies kann insbesondere durch unterschiedliche Winkelanordnungen der einzelnen Beugungsgitter erzielt werden. Z.B. einmal pro Umdrehung kann über ein fünftes Beugungsgitter 226 ein Referenzsignal zur Nullstellung auf einen weiteren Fotodetektor generiert werden.

Die Strahlen der ersten Beugungsordnungen der jeweiligen Beugungsgitter der Maßspur können z.B. mittels Fotodetektoren detektiert werden. So kann z.B. der ersten Beugungsordnung der jeweiligen Beugungsgitter jeweils ein Fotodetektor zugeordnet werden. Alternativ können die durch Beugung an der Maßspur erzeugten Messstrahlen durch ein (ein- oder zweidimensionales) Fotodetektorrenarray erfasst bzw. detektiert werden.

Das erste Beugungsgitter 221 kann z.B. derart ausgelegt werden, ein sinusartiges Signal mit negativen Vorzeichen zu erzeugen. Durch Einsatz der zweiten verschachtelten Gitterstruktur bzw. des zweiten Beugungsgitters 222 wird zur Richtungsdetektion ein cosinusartiges Signal an der Position der ersten Beugungsordnung erzeugt und kann mittels eines zweiten Fotodetektors detektiert werden.

Um die Stabilität der Ausgangssignale im Betrieb zu erhöhen, können insgesamt vier Beugungsgitter vorgesehen werden. Das dritte Beugungsgitter 223 kann z.B. derart ausgelegt werden, ein sinusartiges Signal mit negativen Vorzeichen in einem dritten Fotodetektor zu erzeugen und das vierte Beugungsgitter 224 kann z.B. derart ausgelegt werden, ein cosinusartiges Signal mit negativen Vorzeichen zu erzeugen. Damit wird eine Vierphasenauswertung mit insgesamt vier Fotodetektoren (z.B. vier Fotodioden) ermöglicht.

Die Gitterkonstanten der jeweiligen Beugungsgitter der Maßspur kann z.B. 1,6 µm betragen, der Abstand zwischen den einzelnen Beugungsgittern kann z.B. ca. 10 µm betragen. Das Material als Spritzprägeausführung der Scheibe kann z.B. PC sein.

Die diffraktive Kompensationsspur kann als ein Reflektionsgitter ausgebildet werden, wie in **Fig. 3c** gezeigt. Die Gitterkonstante kann in Abhängigkeit von dem zur Beleuchtung verwendeten Licht geeignet festgelegt werden, so dass die Strahlen der N-ten (z.B. der ersten) Beugungsordnung in Richtung des gemeinsamen Zentrums der Kompensations- und der Maßspur abgelenkt werden. Die Kompensationsspur kann jedoch auch als ein Transmissionsgitter ausgebildet werden.

Die Gitterkonstante der Kompensationsspur kann z.B. ca. 1 µm betragen. Das Material als Spritzprägeausführung der Scheibe kann z.B. PC sein.

Vorstehend wurde eine beispielhafte Kodierscheibe für einen optischen Drehgeber mit einer diffraktiven Kompensationsspur beschrieben. Die Kompensationsspur kann jedoch eine andere Struktur, beispielsweise eine Spiegelstruktur (z.B. eine unter einem geeigneten Winkel umlaufende Spiegelfläche) oder eine Prismenstruktur aufweisen.

Die oben beschriebenen Drehwinkelsensoren bzw. Drehgeber können für zahlreiche Anwendungen bei rotierenden Maschinenkomponenten, Elektromotoren, im Kraftfahrzeugen, z. B. zur Detektion des Lenkwinkels, etc. eingesetzt werden.

### Bezugszeichenliste

10 Kodierscheibe eines nicht-kompensierten Drehgebers
12 Maßspur
12' dezentrierte Maßspur
20 modifizierte Kodierscheibe
22 Maßspur
22' dezentrierte Maßspur
22-A Teilabschnitt der Maßspur
221, 222, 223, 224 Beugungsgitter;
225 Nicht strukturierter Bereich
226 Beugungsgitter zur Nullstellung
24 Kompensationsspur
24' dezentrierte Kompensationsspur
24-A Teilabschnitt der Kompensationsspur
26 Oberfläche der Kodierscheibe
30, 32, 34 Spiegel
40 Welle
50 Lichtquelle
60 Detektionsvorrichtung (Fotodetektor)
100 Drehwinkelsensor bzw. Drehgeber
B Beleuchtung bzw. Beleuchtungsspot Maßspur bei einem nicht-kompensierten Drehgeber
B_{M} Beleuchtung bzw. Beleuchtungsspot Maßspur bei einem kompensierten Drehgeber
B_{K} Beleuchtung bzw. Beleuchtungsspot der Kompensationsspur bei einem kompensierten Drehgeber
S0 Beleuchtung bzw. Beleuchtungsstrahl der Kompensationsspur
S1 erste Beugungsordnung
S2 umgelenkte Strahlen der ersten Beugungsordnung
S3 Messstrahl
R_{M} Radius der Maßspur
R_{K} Radius der Kompensationsspur
M Mittelpunkt der Maß- und Kompensationsspur
M' dezentrierter Mittelpunkt der Maß- und Kompensationsspur
W Mittelpunkt der Welle
e Dezentrierung der Maßspur
ϕ wahrer Winkel
ϕ' gemessenen Winkel

## Patentansprüche

1. Optischer Drehgeber (100) umfassend
eine Kodierscheibe (20) umfassend:
zumindest eine Maßspur (22), welche derart ausgelegt ist, dass bei einer Beleuchtung (S2) eines Abtastbereichs der Maßspur (22) zumindest ein optischer Messstrahl (S3) erzeugt wird, wobei zumindest ein optischer Parameter des Messstrahls (S3) in Abhängigkeit von dem zu messenden Winkel moduliert wird, und wobei die Maßspur (22) in einem ersten radialen Bereich der Kodierscheibe (20) angeordnet ist; und
zumindest eine Kompensationsspur (24), welche zentriert zu der Maßspur (22) auf einem zweiten radialen Bereich der Kodierscheibe (20) angeordnet ist, wobei das Zentrum der Maßspur (22) mit dem Zentrum der Kompensationsspur (24) zusammenfällt;
eine optische bzw. optoelektronische Abtastvorrichtung, welche ausgelegt ist, einen Abtastbereich der Maßspur (22) der Kodierscheibe (20) zu beleuchten, umfassend:
eine Beleuchtungsvorrichtung (50), welche ausgelegt ist, einen Bereich der Kompensationsspur (24) der Kodierscheibe (20) mit Licht (S0) zu beleuchten, wobei zumindest ein Strahl (S1) erzeugt wird;
eine Umlenkvorrichtung (30; 32, 34), welche ausgelegt und angeordnet ist, den durch die Beleuchtung der Kompensationsspur (24) erzeugten Strahl (S1) auf den Abtastbereich der Maßspur (22) umzulenken, wobei der Abtastbereich der Maßspur (22) durch den umgelenkten Strahl (S2) beleuchtet wird,
wobei der optische Drehgeber (100) **dadurch gekennzeichnet ist, dass**:
der durch die Beleuchtung der Kompensationsspur (24) erzeugte Strahl (S1) radial in Richtung der Achse durch das gemeinsame Zentrum von Kompensations- und Maßspur (22, 24) gerichtet ist.

2. Optischer Drehgeber (100) nach Anspruch 1, wobei die Beleuchtungsvorrichtung zumindest eine Lichtquelle (50) umfasst und wobei die Umlenkvorrichtung (30; 32, 34) feststehend relativ zu der Lichtquelle (50) ist.

3. Optischer Drehgeber (100) nach einem der Ansprüche 1 oder 2, wobei die Abtastvorrichtung derart ausgelegt ist, dass
die Richtung des zumindest einen Strahls (S1), welcher mittels Beleuchtung der Kompensationsspur (24) erzeugt wird, einen Schnittpunkt mit der Achse durch das gemeinsame Zentrum von Kompensations- und Maßspur (22, 24) besitzt; und
der Abstand zwischen der Kompensationsspur (24) und diesem Schnittpunkt der Länge des Lichtwegs zwischen der Kompensationsspur (24) und der Maßspur (22) entspricht.

4. Optischer Drehgeber (100) nach einem der Ansprüche 1 bis 3, wobei die Kompensationsspur eine diffraktive Struktur aufweist, und wobei der zumindest eine Strahl, welcher durch Beleuchtung der Kompensationsspur (24) erzeugt wird, durch zumindest einen Teil der durch Beugung an der Kompensationsspur (24) aufgespalteten Strahlen (S1) der N-ten Beugungsordnung geformt wird, wobei N eine ganze Zahl ist.

5. Optischer Drehgeber (100) nach Anspruch 4, wobei
die Abtastvorrichtung derart ausgelegt ist, dass das die Kompensationsspur (24) beleuchtende Licht (S0) unter einem Winkel von im Wesentlichen 90° auf den Bereich der Kompensationsspur (24) einfällt; und/oder
wobei die Kompensationsspur (24) derart ausgelegt ist, dass N gleich 1 ist.

6. Optischer Drehgeber (100) nach einem der Ansprüche 1 bis 5, wobei die Abtastvorrichtung derart ausgelegt ist, dass die optische Weglänge von der Kompensationsspur (24) zur Maßspur (22) der optischen Weglänge von der Kompensationsspur (24) zur Achse durch das gemeinsame Zentrum von Kompensations- und Maßspur (22, 24) entspricht.

7. Optischer Drehgeber (100) nach einem der Ansprüche 1 bis 6 ferner umfassend eine Detektionsvorrichtung (60), welche ausgelegt ist, zumindest einen Teil des zumindest einen durch eine Beleuchtung der Maßspur (22) erzeugten optischen Messstrahls (S3) zu detektieren.

8. Optischer Drehgeber (100) nach einem der Ansprüche 1 bis 7, wobei der optische Drehgeber ein Auflicht- oder ein Durchlichtdrehgeber ist.

9. Optischer Drehgeber (100) nach einem der Ansprüche 1 bis 8, wobei der optische Drehgeber ein inkrementaler oder ein absoluter Drehgeber ist.

10. Optischer Drehgeber nach einem der Ansprüche 1 bis 9, wobei die Maßspur (22) eine diffraktive Maßspur (22) ist.

11. Optischer Drehgeber (100) nach einem der Ansprüche 1 bis 10, wobei der Radius der Kompensationsspur (24) kleiner, größer oder gleich dem Radius der Maßspur (22) ist.

12. Optischer Drehgeber (100) nach einem der Ansprüche 1 bis 11, wobei die Kodierscheibe (20) eine Reflektions- oder eine Transmissionskodierscheibe ist.

13. Verfahren zur Kompensation eines Winkelmessfehlers in einem optischen Drehgeber (100), umfassend die Schritte:
- Bereitstellen einer Kodierscheibe (20) umfassend:
zumindest eine Maßspur (22), welche derart ausgelegt ist, dass bei einer Beleuchtung (S2) eines Abtastbereichs der Maßspur (22) zumindest ein optischer Messstrahl (S3) erzeugt wird, wobei zumindest ein optischer Parameter des Messstrahls (S3) in Abhängigkeit von dem zu messenden Winkel moduliert wird, und wobei die Maßspur (22) in einem ersten radialen Bereich der Kodierscheibe (20) angeordnet ist; und
zumindest eine Kompensationsspur (24), welche zentriert zu der Maßspur (22) auf einem zweiten radialen Bereich der Kodierscheibe (20) angeordnet ist, wobei das Zentrum der Maßspur mit dem Zentrum der Kompensationsspur (24) zusammenfällt,
- Beleuchten eines Bereichs der Kompensationsspur (24) mit Licht (S0), welches unter einem vorgegebenen oder einstellbaren Beleuchtungswinkel auf einen Bereich der Kompensationsspur (24) einfällt, wobei zumindest ein Strahl (S1) erzeugt wird; und
- Umlenken des durch die Beleuchtung der Kompensationsspur (24) erzeugten Strahls (S1) derart, dass ein Abtastbereich der Maßspur (22) durch zumindest einen Teil des umgelenkten Strahls (S2) beleuchtet wird,
wobei das Verfahren **dadurch gekennzeichnet ist, dass**:
der durch die Beleuchtung der Kompensationsspur (24) erzeugte Strahl (S1) radial in Richtung der Achse durch das gemeinsame Zentrum von Kompensations- und Maßspur (22, 24) gerichtet ist.

14. Verfahren nach Anspruch 13, ferner umfassend ein Detektieren des zumindest einen Teils zumindest eines durch die Beleuchtung des Abtastbereichs der Maßspur (22) erzeugten Messstrahls (S3).

15. Verwendung einer Kodierscheibe (20) in einem optischen Drehgeber (100), wobei
die Kodierscheibe zumindest eine Maßspur (22) und zumindest eine Kompensationsspur (24) aufweist,
die Maßspur (22) derart ausgelegt ist, dass bei einer Beleuchtung (S2) eines Abtastbereichs der Maßspur (22), zumindest ein optischer Messstrahl (S3) erzeugt wird, wobei zumindest ein optischer Parameter des Messstrahls (S3) in Abhängigkeit von dem zu messenden Winkel moduliert wird, und wobei die Maßspur (22) in einem ersten radialen Bereich der Kodierscheibe (20) angeordnet ist; und
die Kompensationsspur (24) zentriert zu der Maßspur (22) auf einem zweiten radialen Bereich der Kodierscheibe (20) angeordnet ist, wobei das Zentrum der Maßspur (22) mit dem Zentrum der Kompensationsspur (24) zusammenfällt,
wobei die Verwendung der Kodierscheibe (20) derart erfolgt, dass:
ein Bereich der Kompensationsspur (24) mit Licht (S0), welches unter einem vorgegebenen oder einstellbaren Beleuchtungswinkel auf einen Bereich der Kompensationsspur (24) einfällt, beleuchtet wird, wobei zumindest ein Strahl (S1) erzeugt wird; und
der durch die Beleuchtung der Kompensationsspur (24) erzeugte Strahl (S1) mittels einer Umlenkvorrichtung derart umgelenkt wird, dass ein Abtastbereich der Maßspur (22) durch den umgelenkten Strahl (S2) beleuchtet wird, und
wobei die Verwendung der Kodierscheibe (20) **dadurch gekennzeichnet ist, dass**:
der durch die Beleuchtung der Kompensationsspur (24) erzeugte Strahl radial in Richtung der Achse durch das gemeinsame Zentrum von Kompensations- und Maßprur (22, 24) gerichtet ist.

## Claims

1. An optical rotary encoder (100), comprising
an encoder disc (20), comprising:
at least one measuring track (22) designed such that when a scanning area of the measuring track (22) is illuminated (S2), at least one optical measuring beam (S3) is generated, wherein at least one optical parameter of the measuring beam (S3) is modulated as a function of the angle to be measured, and wherein the measuring track (22) is arranged in a first radial area of the encoder disc (20); and
at least one compensating track (24) arranged in a centered manner with respect to the measuring track (22) on a second radial area of the encoder disc (20), wherein the center of the measuring track (22) coincides with the center of the compensating track (24);
an optical or optoelectronic scanning device designed to illuminate a scanning zone of the measuring track (22) of the encoder disc (20), comprising:
an illumination device (50) designed to illuminate an area of the compensating track (24) of the encoder disc (20) with light (S0), wherein at least beam (S1) is generated;
a deflecting device (30; 32, 34) designed and arranged to deflect the beam (S1) generated by illumination of the compensating track (24) onto the scanning area of the measuring track (22), wherein the scanning area of the measuring track (22) is illuminated by the deflected beam (S2),
the optical rotary encoder (100) being **characterized in that**:
the beam (S1) generated by illumination of the compensating track (24) is directed radially in the direction of the axis through the common center of the compensating and measuring tracks (22, 24).

2. The optical rotary encoder (100) according to claim 1, wherein the illumination device comprises at least one light source (50) and wherein the deflection device (30; 32, 34) is stationary relative to the light source (50).

3. The optical rotary encoder (100) according to one of claims 1 or 2, wherein the scanning device is designed such that
the direction of the at least one beam (S1) generated by means of illumination of the compensating track (24) has a point of intersection with the axis through the common center of the compensating and measuring tracks (22, 24); and
the distance between the compensating track (24) and this point of intersection corresponds to the length of the light path between the compensating track (24) and the measuring track (22).

4. The optical rotary encoder (100) according to one of claims 1 to 3, wherein the compensating track has a diffractive structure, and wherein the at least one beam generated by illumination of the compensating track (24) is formed by at least part of the beams (S1) of the N^{th} diffraction order split by diffraction on the compensating track (24), where N is an integer.

5. The optical rotary encoder (100) according to claim 4, wherein
the scanning device is designed such that the light (S0) illuminating the compensating track (24) is incident on the area of the compensating track (24) at an angle of substantially 90°; and/or
wherein the compensating track (24) is designed such that N is equal to 1.

6. The optical rotary encoder (100) according to one of claims 1 to 5, wherein the scanning device is designed such that that the optical path length from the compensating track (24) to the measuring track (22) corresponds to the optical path length from the compensating track (24) to the axis through the common center of the compensating and measuring tracks (22, 24).

7. The optical rotary encoder (100) according to one of claims 1 to 6, further comprising a detection device (60) designed to detect at least part of the at least one optical measuring beam (S3) generated by illumination of the measuring track (22).

8. The optical rotary encoder (100) according to one of claims 1 to 7, wherein the optical rotary encoder is an incident light or transmitted light rotary encoder.

9. The optical rotary encoder (100) according to one of claims 1 to 8, wherein the optical rotary encoder is an incremental or an absolute rotary encoder.

10. The optical rotary encoder (100) according to one of claims 1 to 9, wherein the measuring track (22) is a diffractive measuring track (22).

11. The optical rotary encoder (100) according to one of claims 1 to 10, wherein the radius of the compensating track (24) is smaller than, greater than or equal to the radius of the measuring track (22).

12. The optical rotary encoder (100) according to one of claims 1 to 11, wherein the encoder disc (20) is a reflection or a transmission encoder disc.

13. A method for compensation of an angle measurement error in an optical rotary encoder (100), comprising the steps of:
- providing an encoder disc (20), comprising:
at least one measuring track (22) designed such that when a scanning area of the measuring track (22) is illuminated (S2), at least one optical measuring beam (S3) is generated, wherein at least one optical parameter of the measuring beam (S3) is modulated as a function of the angle to be measured, and wherein the measuring track (22) is arranged in a first radial area of the encoder disc (20); and
at least one compensating track (24) arranged in a centered manner with respect to the measuring track (22) on a second radial area of the encoder disc (20), wherein the center of the measuring track (22) coincides with the center of the compensating track (24);
- illuminating an area of the compensating track (24) with light (S0) that is incident on an area of the compensating track (24) at a predetermined or adjustable illumination angle, wherein at least one beam (S1) is generated; and
- deflecting the beam (S1) generated by illumination of the compensating track (24) such that a scanning area of the measuring track (22) is illuminated by at least part of the deflected beam (S2),
the method being **characterized in that**:
the beam (S1) generated by illumination of the compensating track (24) is directed radially in the direction of the axis through the common center of the compensating and measuring tracks (22, 24).

14. The method according to claim 13, further comprising detecting the at least part of at least one measuring beam (S3) generated by illumination of the scanning area of the measuring track (22).

15. A use of an encoder disc (20) in an optical rotary encoder (100), wherein
the encoder disc (20) comprises at least one measuring track (22) and at least one compensating track (24),
the measuring track (22) being designed such that when a scanning area of the measuring track (22) is illuminated (S2), at least one optical measuring beam (S3) is generated, wherein at least one optical parameter of the measuring beam (S3) is modulated as a function of the angle to be measured, and wherein the measuring track (22) is arranged in a first radial area of the encoder disc (20); and
the compensating track (24) being arranged in a centered manner with respect to the measuring track (22) on a second radial area of the encoder disc (20), wherein the center of the measuring track (22) coincides with the center of the compensating track (24);
wherein the encoder disc (20) is used such that:
an area of the compensating track (24) is illuminated with light (S0) that is incident on an area of the compensating track (24) at a predetermined or adjustable illumination angle, wherein at least one beam (S1) is generated; and
the beam (S1) generated by illumination of the compensating track (24) is deflected by means of a deflecting device such that a scanning area of the measuring track (22) is illuminated by the deflected beam (S2), and
the use of the encoder disc (20) being **characterized in that**:
the beam (S1) generated by illumination of the compensating track (24) is directed radially in the direction of the axis through the common center of the compensating and measuring tracks (22, 24).

## Revendications

1. Capteur de rotation optique (100) comprenant
un disque codeur (20) comprenant :
au moins une marque graduée (22) qui est conçue de telle sorte que lors d'un éclairage (S2) d'une région de balayage de la marque graduée (22), au moins un rayon de mesure optique (S3) est généré, dans lequel au moins un paramètre optique du rayon de mesure (S3) est modulé en fonction de l'angle à mesurer, et dans lequel la marque graduée (22) est disposée dans une première région radiale du disque codeur (20) ; et
au moins une marque de compensation (24) qui est disposée de manière centrée par rapport à la marque graduée (22) sur une seconde région radiale du disque codeur (20), dans lequel le centre de la marque graduée (22) coïncide avec le centre de la marque de compensation (24) ;
un dispositif de balayage optique ou optoélectronique qui est conçu pour éclairer une région de balayage de la marque graduée (22) du disque codeur (20), comprenant :
un dispositif d'éclairage (50) qui est conçu pour éclairer une région de la marque de compensation (24) du disque codeur (20) avec de la lumière (S0), dans lequel au moins un rayon (S1) est généré ;
un dispositif de déviation (30 ; 32 ; 34) qui est conçu et disposé pour dévier le rayon (S1) généré par l'éclairage de la marque de compensation (24) sur la région de balayage de la marque graduée (22), dans lequel la région de balayage de la marque graduée (22) est éclairée par le rayon dévié (S2),
dans lequel le capteur de rotation optique (100) est **caractérisé en ce que** :
le rayon (S1) généré par l'éclairage de la marque de compensation (24) est orienté radialement en direction de l'axe à travers le centre commun de la marque de compensation et graduée (22, 24).

2. Capteur de rotation optique (100) selon la revendication 1, dans lequel le dispositif d'éclairage comprend au moins une source de lumière (50) et dans lequel le dispositif de déviation (30 ; 32 ; 34) est fixe par rapport à la source de lumière (50).

3. Capteur de rotation optique (100) selon une des revendications 1 ou 2, dans lequel le dispositif de balayage est conçu de telle sorte que la direction de l'au moins un rayon (S1) qui est généré au moyen de l'éclairage de la marque de compensation (24) possède un point d'intersection avec l'axe à travers le centre commun de la marque de compensation et graduée (22, 24) ; et l'écart entre la marque de compensation (24) et ce point d'intersection correspond à la longueur du chemin optique entre la marque de compensation (24) et la marque graduée (22).

4. Capteur de rotation optique (100) selon une des revendications 1 à 3, dans lequel la marque de compensation présente une structure diffractive et dans lequel l'au moins un rayon qui est généré par l'éclairage de la marque de compensation (24) est formé à travers au moins une partie des rayons (S1) fractionnés par la diffraction sur la marque de compensation (24) du N-ième ordre de diffraction, dans lequel N est un nombre entier.

5. Capteur de rotation optique (100) selon la revendication 4, dans lequel le dispositif de balayage est conçu de telle sorte que la lumière (S0) éclairant la marque de compensation (24) est incidente à un angle d'essentiellement 90° sur la région de la marque de compensation (24) ; et/ou
dans lequel la marque de compensation (24) est conçue de telle sorte que N est égal à 1.

6. Capteur de rotation optique (100) selon une des revendications 1 à 5, dans lequel le dispositif de balayage est conçu de telle sorte que la longueur de trajet optique de la marque de compensation (24) à la marque graduée (22) correspond à la longueur de trajet optique de la marque de compensation (24) à l'axe à travers le centre commun de la marque de compensation et graduée (22, 24).

7. Capteur de rotation optique (100) selon une des revendications 1 à 6, comprenant en outre un dispositif de détection (60) qui est conçu pour détecter au moins une partie de l'au moins un rayon de mesure optique (S3) généré par un éclairage de la marque graduée (22).

8. Capteur de rotation optique (100) selon une des revendications 1 à 7, dans lequel le capteur de rotation optique est un capteur de rotation à lumière incidente ou à lumière transmise.

9. Capteur de rotation optique (100) selon une des revendications 1 à 8, dans lequel le capteur de rotation optique est un capteur de rotation incrémental ou absolu.

10. Capteur de rotation optique selon une des revendications 1 à 9, dans lequel la marque graduée (22) est une marque graduée diffractive (22).

11. Capteur de rotation optique (100) selon une des revendications 1 à 10, dans lequel le rayon de la marque de compensation (24) est inférieur, supérieur ou égal au rayon de la marque graduée (22).

12. Capteur de rotation optique (100) selon une des revendications 1 à 11, dans lequel le disque codeur (20) est un disque codeur à réflexion ou transmission.

13. Procédé de compensation d'une erreur de mesure angulaire dans un capteur de rotation optique (100), comprenant les étapes de :
- mise à disposition d'un disque codeur (20) comprenant :
au moins une marque graduée (22) qui est conçue de telle sorte que lors d'un éclairage (S2) d'une région de balayage de la marque graduée (22), au moins un rayon de mesure optique (S3) est généré, dans lequel au moins un paramètre optique du rayon de mesure (S3) est modulé en fonction de l'angle à mesurer, et dans lequel la marque graduée (22) est disposée dans une première région radiale du disque codeur (20) ; et
au moins une marque de compensation (24) qui est disposée de manière centrée par rapport à la marque graduée (22) sur une seconde région radiale du disque codeur (20), dans lequel le centre de la marque graduée coïncide avec le centre de la marque de compensation (24),
- éclairage d'une région de la marque de compensation (24) avec de la lumière (S0) qui est incidente à un angle d'éclairage prédéfini ou réglable sur une région de la marque de compensation (24), dans lequel au moins un rayon (S1) est généré ; et
- déviation du rayon (S1) généré par l'éclairage de la marque de compensation (24) de telle sorte qu'une région de balayage de la marque graduée (22) est éclairée par au moins une partie du rayon dévié (S2),
dans lequel le procédé est **caractérisé en ce que** :
le rayon (S1) généré par l'éclairage de la marque de compensation (24) est orienté radialement en direction de l'axe à travers le centre commun de la marque de compensation et graduée (22, 24).

14. Procédé selon la revendication 13, comprenant en outre une détection de l'au moins une partie d'au moins un rayon de mesure (S3) généré par l'éclairage de la région de balayage de la marque graduée (22).

15. Utilisation d'un disque codeur (20) dans un capteur de rotation optique (100), dans laquelle
le disque codeur présente au moins une marque graduée (22) et au moins une marque de compensation (24),
la marque graduée (22) est conçue de telle sorte que lors d'un éclairage (S2) d'une région de balayage de la marque graduée (22), au moins un rayon de mesure optique (S3) est généré, dans laquelle au moins un paramètre optique du rayon de mesure (S3) est modulé en fonction de l'angle à mesurer, et dans laquelle la marque graduée (22) est disposée dans une première région radiale du disque codeur (20) ; et
la marque de compensation (24) est disposée de manière centrée par rapport à la marque graduée (22) sur une seconde région radiale du disque codeur (20), dans laquelle le centre de la marque graduée (22) coïncide avec le centre de la marque de compensation (24),
dans laquelle l'utilisation du disque codeur (20) s'effectue de telle sorte que :
une région de la marque de compensation (24) est éclairée avec de la lumière (S0) qui est incidente à un angle d'éclairage prédéfini ou réglable sur une région de la marque de compensation (24), dans laquelle au moins un rayon (S1) est généré ; et
le rayon (S1) généré par l'éclairage de la marque de compensation (24) est dévié au moyen d'un dispositif de déviation de telle sorte qu'une région de balayage de la marque graduée (22) est éclairée par le rayon dévié (S2), et
dans laquelle l'utilisation du disque codeur (20) est **caractérisée en ce que** :
le rayon généré par l'éclairage de la marque de compensation (24) est orienté radialement en direction de l'axe à travers le centre commun de la marque de compensation et graduée (22, 24).
